Europäisches Patentamt

European Patent Office

Office européen des brevets

(11) Veröffentlichungsnummer: **0 073 311**
**A1**

## (12) EUROPÄISCHE PATENTANMELDUNG

(21) Anmeldenummer: 82105392.3

(22) Anmeldetag: 19.06.82

(51) Int. Cl.³: **B 65 H 75/24**

(30) Priorität: 28.08.81 DE 3134146

(43) Veröffentlichungstag der Anmeldung: 09.03.83
Patentblatt 83/10

(84) Benannte Vertragsstaaten: DE FR GB IT

(71) Anmelder: Hans Lenze & Co. KG, Hans-Lenze-Strasse 1,
D-3251 Aerzen 2 (DE)

(72) Erfinder: Bürkle, Wolfgang, Zum Bohrturm 3,
D-3250 Hameln 1 (DE)
Erfinder: Opitz, Dieter, Ringstrasse 32, D-8671 Förbau
(DE)

(74) Vertreter: Thielking, Bodo, Dipl.-Ing. et al, Patentanwälte
Dipl.-Ing. Bodo Thielking Dipl.-Ing. Otto Elberzhagen
Gadderbaumer Strasse 20, D-4800 Bielefeld 1 (DE)

(54) **Spannwelle für Wickelhülsen.**

(57) Bei einer Spannwelle für Wickelhülsen, deren Durchmesser sich beim Einblasen von Luft in am Umfang angeordnete Schlauchbereiche vergrößert, ist eine neuartige Verbindung zwischen dem Schlauch (5) und dem Ventil (4) vorgesehen. Der Lufteinlaß erfolgt über eine Schraube (7) mit einem axialen Kanal, von dem Radialbohrungen seitlich in das Schlauchinnere geführt sind. Die Schraube durchsetzt den Schlauch (5) und ist in ein Aufnahmegewinde (1a) am zentralen Wellenstück (1) eingeschraubt. Die Schraube (7) und eine deren Schaft (7b) umschließende Scheibe (8) mit Radialbohrungen liegen klemmend an dem Schlauch (5) an.

## Spannwelle für Wickelhülsen

Die Erfindung betrifft eine Spannwelle für Maschinen zum Wickeln von Warenbahnen, mit über Luftzufuhr in einen flexiblen Schlauch veränderbarem Außendurchmesser, mit einem Ventil für die Luftzufuhr bzw. Luftabfuhr und einem in den Schlauch einmündenden, an einem zentralen Wellenstück befestigten Lufteinlaß.

Bei einer bekannten Spannwelle dieser Art (DE-OS 26 55 935) erstrecken sich mehrere Schlauchstücke, die gleichmäßig über den Umfang verteilt sind, parallel zueinander in Längsrichtung der Spannwelle. Der Lufteinlaß erfolgt über ein zentrales, stirnseitig angeordnetes Ventil und eine sich anschließende Zentralbohrung, von der aus Radialkanäle zu den verschiedenen Schlauchstücken verlaufen. Am Übergang zwischen der Radialbohrung und dem zugehörigen Schlauchstück ist ein Einlaß vorgesehen, der durch eine Platte mit einem zentralen, in den Radialkanal ragenden Stutzen gebildet wird. Die Platte liegt im Inneren des Schlauchs und der Stutzen wird über Klemmelemente kraftschlüssig im Radialkanal gehalten. Diese Konstruktion hält den bei hohen Drehzahlen auftretenden Zentrifugalkräften nicht stand. Die eingeklemmten Platten mit Zapfen lösen sich bei einer
entsprechenden Belastung sehr leicht und dies führt
dazu, daß die Spannwelle funktionsuntüchtig wird.
Außerdem ist die Montage der bekannten Lufteinlässe
relativ aufwendig. Schließlich muß die Platte, welche
dichtend an der Innenseite des Schlauchbereichs anliegen soll, vergleichsweise groß ausgebildet sein,
weil nur mit einer großen Anlagefläche der Platte
die erforderliche Abdichtung erzielt werden kann.
Auch hierdurch wird der montagetechnische Aufwand
für ein Auswechseln eines Schlauchs, wie es nach
einer bestimmten Betriebszeit nötig ist, relativ
groß.

Bei einer anderen bekannten Lösung (DE-GM 80 04 622)
ist ein zentrales Wellenstück schraubenlinienförmig
mit einem Schlauch bewickelt. Bei dieser Konstruktion
ist der Schlauch auf ein an einer Stirnseite vorgesehenes zentrales Ventil aufgesteckt und dort mit
einer Schelle gesichert. Beim Austritt des Schlauchs
auf die Außenfläche des zentralen Wellenstücks
wird der Schlauch sehr leicht geknickt. Dies führt
entweder zu einer Störung des Luftstroms oder dazu, daß der Schlauch am Übergang nach außen beschädigt wird. Bei einem Verschleiß des Ventils
und/oder des Schlauchs ist ein Wechsel der verschlissenen Teile nur mit Hilfe umfangreicher
Montagearbeiten möglich.

Ausgehend von einer Spannwelle der eingangs erwähnten Art liegt der Erfindung die Aufgabe zugrunde,
eine Spannwelle so auszubilden, daß sie eine einfache und verschleißfeste Montage bzw. Demontage
des flexiblen Spannschlauchs und des Lufteinlasses sowie des Ventils ermöglicht.

Die Lösung dieser Aufgabe erfolgt erfindungsgemäß dadurch, daß der Lufteinlaß von einer Schraube mit einer Axialbohrung und einer davon abgehenden Radialbohrung gebildet ist und der Schaft der Schraube von einem in den Schlauch eingelegten Zwischenstück umgeben ist, das einen seitlichen Durchgang zwischen der Radialbohrung der Schraube und dem Inneren des Schlauchs aufweist und, geklemmt durch den Schraubenkopf, dicht mit seiner Oberseite und seiner Unterseite an einander gegenüberliegenden Innenbereichen des Schlauchs anliegt.

Es hat sich als zweckmäßig erwiesen, daß das Zwischenstück eine Scheibe mit mindestens einer Radialbohrung ist.

Bei einer derartigen Spannwelle sind sowohl die Erstmontage als auch das Auswechseln des Schlauchs und des Ventils sehr einfach durchzuführen. Es genügt ein Einschieben des Zwischenstücks am Schlauchende, ein anschließendes Durchstoßen des Schlauchs im Bereich über der Gewindebohrung für die Befestigungsschraube und ein danach erfolgendes Einfädeln der Schraube bzw. Festziehen. Diese Tätigkeiten können mit wenigen Handgriffen durchgeführt werden.

Es hat sich ferner als besonders zweckmäßig erwiesen, daß die Radialbohrung der Schraube in eine umlaufende Außennut und die Radialbohrung des Zwischenstücks in eine umlaufende Innennut münden und die beiden Nuten gemeinsam einen umlaufenden Kanal bilden.

Bei einer solchen Konstruktion ist eine Verbindung zwischen der Axialbohrung der Schraube und dem Inneren des Schlauchs in jeder Drehstellung der Schraube gegeben.

Bei einer bevorzugten Ausführungsform ist das Ventil in die Schraube eingesetzt. Eine derartige Lösung ermöglicht den Verzicht auf besondere Zusatzbohrungen im zentralen Wellenstück, die zur Aufnahme des Ventils dienen.

Schließlich wird erfindungsgemäß noch vorgeschlagen, daß der unterhalb des Schraubenkopfes liegende Außenbereich des zentralen, die Schraube haltenden Wellenstücks als senkrecht zum Radius verlaufende Ebene ausgebildet ist.

Eine derartige Ausbildung schafft besonders präzise Dichtungs- und Anlageverhältnisse im Bereich des Lufteinlasses.

Nachstehend wird eine bevorzugte Ausführungsform der Erfindung anhand der Zeichnung beschrieben. Es zeigen:

Figur 1 - einen Längsschnitt durch eine erste Ausführungsform der Spannwelle,

Figur 2 - den Lufteinlaß gemäß Figur 1 in einem ersten Längsschnitt,

Figur 3 - den Lufteinlaß gemäß Figur 2 in einem zu Figur 2 senkrechten Schnitt,

Figur 4 - eine weitere Ausführungsform des Lufteinlasses mit eingesetztem Ventil,

Figur 5 - eine dritte Ausführungsform des
Lufteinlasses mit einem Ventil an dem
dem Lufteinlaß gegenüberliegenden Ende
eines Radialkanals.

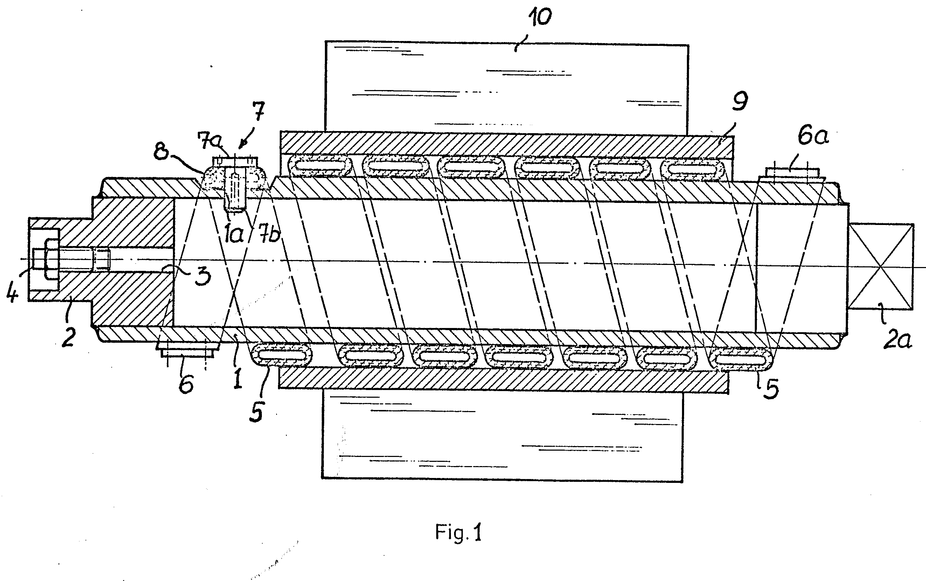

In Figur 1 ist eine Spannwelle im Längsschnitt
schematisch dargestellt. Ein zentrales Wellenstück 1 wird durch ein Rohr gebildet, das an
seinen Enden Einsätze 2 und 2a mit Vierkant zur
Aufnahme in eine Wickelvorrichtung aufweist. Der
Einsatz 2 ist mit einer zentralen Axialbohrung 3
versehen, die in das Innere des zentralen Wellenstücks 1 führt und an ihrem äußeren Ende ein eingeschraubtes Luftventil 4 aufnimmt. Um das zentrale
Wellenstück ist ein Schlauch 5 schraubenlinienförmig herumgelegt. Der Schlauch 5 ist an beiden
Enden luftdicht abgeklemmt und mit nicht näher
dargestellten Befestigungselementen 6 und 6a am
zentralen Wellenstück befestigt.

An einer Seite ist der Lufteinlaß vorgesehen, der
durch eine Schraube 7 mit einem Schraubenkopf 7a
und einem Schraubenschaft 7b gebildet wird. Die
Schraube 7 durchsetzt ein im Inneren des Schlauchs
5 angeordnetes, als Scheibe ausgebildetes Zwischenstück 8. Der Schraubenschaft 7b ist in eine Gewindebohrung 1a des zentralen Wellenstücks eingeschraubt. Beim Anziehen der Schraube 7 wird der
Schlauch von seiner Außenseite zwischen der Unterseite des Schraubenkopfes und der gegenüberliegenden Auflagefläche eingeklemmt. Im Inneren
des Schlauches liegt das Zwischenstück mit seiner
Oberseite am oberen Schlauchbereich und mit seiner
Unterseite am unteren Schlauchbereich dicht an.
Auf der Spannwelle sitzt eine Hülse 9 mit dem
Wickelgut 10. Die Hülse wird beim Aufblasen des Schlauchs 5 kraftschlüssig mit der Spannwelle verbunden.

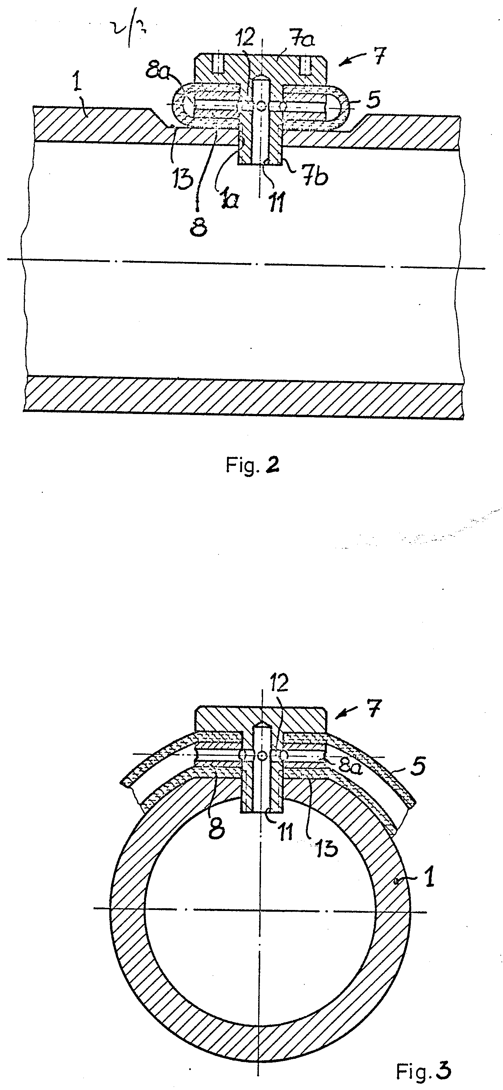

In Figur 2 ist der Lufteinlaß in den Schlauch 5 genauer dargestellt. Die Schraube 7 mit dem Schraubenkopf 7a und dem Schraubenschaft 7b besitzt eine im Schraubenkopf 7a endende Axialbohrung 11. Von der Axialbohrung 11 gehen Radialbohrungen 12 ab. Die Radialbohrungen 12 liegen den Radialbohrungen 8a des Zwischenstücks 8 gegenüber. Die Radialbohrungen 8a münden einerseits auf den Außenseiten des Zwischenstücks 8 und andererseits in einer Ringnut in der zentralen Durchgangsbohrung des Zwischenstücks. Diese Ringnut fluchtet mit einer umlaufenden Ringnut auf dem Schaft 7b der Schraube und gemeinsam bilden diese Nuten einen umlaufenden Ringkanal. Die Luft gelangt aus dem zentralen Innenraum des zentralen Wellenstücks über die Axialbohrung 11, die Radialbohrung 12 und die Radialbohrung 8a ins Innere des Schlauchs 5.

Das zentrale Wellenstück 1 ist im unterhalb des Schraubenkopfes 7 liegenden Außenbereich als senkrecht zum Radius des zentralen Wellenstücks verlaufende Ebene 13 ausgebildet.

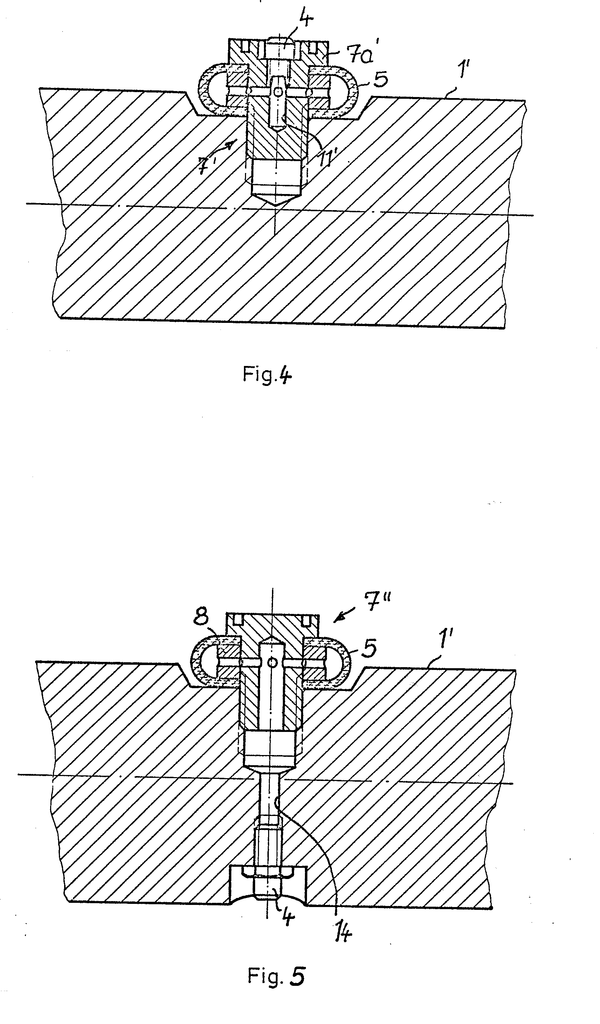

Bei der Ausführungsform gemäß Figur 4 ist das Ventil 4 im Zentrum des Schraubenkopfes 7a' eingeschraubt. Die Axialbohrung 11' ist in diesem Fall als nach unten geschlossene Sacklochbohrung ausgeführt.

Bei der Ausführungsform gemäß Figur 5 sitzt das Ventil 4 am Ende eines Radialkanals 14 durch ein massives zentrales Wellenstück 1'.

Es ist ebensogut möglich, bei einer solchen Ausführungsform den Luftzufuhrkanal mit einer durch die Wellenachse verlaufenden Zentralbohrung zu einem stirnseitig angeordneten Ventil zu führen.

Patentansprüche:

1. Spannwelle für Maschinen zum Wickeln von Warenbahnen, mit über Luftzufuhr in einen flexiblen Schlauch veränderbarem Außendurchmesser, mit einem Ventil für die Luftzufuhr bzw. Luftabfuhr und einem in den Schlauch einmündenden, an einem zentralen Wellenstück befestigten Lufteinlaß, dadurch gekennzeichnet, daß der Lufteinlaß von einer Schraube (7) mit einer Axialbohrung (11; 11') und einer davon abgehenden Radialbohrung (12) gebildet ist und der Schaft (7b) der Schraube (7) von einem in den Schlauch (5) eingelegten Zwischenstück (8) umgeben ist, das einen seitlichen Durchgang (8a) zwischen der Radialbohrung (12) der Schraube und dem Inneren des Schlauchs (5) aufweist und, geklemmt durch den Schraubenkopf (7a), dicht mit seiner Oberseite und seiner Unterseite an einander gegenüberliegenden Innenbereichen des Schlauchs (5) anliegt.

2. Spannwelle nach Anspruch 1, dadurch gekennzeichnet, daß das Zwischenstück (8) eine Scheibe mit mindestens einer Radialbohrung (8a) ist.

3. Spannwelle nach Anspruch 1 oder 2, dadurch gekennzeichnet, daß die Radialbohrung (12) der Schraube (7) in eine umlaufende Außennut und die Radialbohrung (8a) des Zwischenstücks (8) in eine umlaufende Innenut münden und die beiden Nuten gemeinsam einen umlaufenden Kanal bilden.

- 2 -

4. Spannwelle nach einem oder mehreren der Ansprüche 1 bis 3,
dadurch gekennzeichnet,
daß das Ventil (4) in die Schraube (7') eingesetzt ist.

5. Spannwelle nach einem oder mehreren der Ansprüche 1 bis 4,
dadurch gekennzeichnet,
daß der unterhalb des Schraubenkopfes (7a) liegende Außenbereich des zentralen, die Schraube haltenden Wellenstücks (1) als senkrecht zum Radius verlaufende Ebene (13) ausgebildet ist.

Fig. 1

1/5

0073311

2/3

0073311

Fig. 2

Fig. 3

Fig.4

Fig. 5

## EINSCHLÄGIGE DOKUMENTE

EP 82105392.3

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | DE - B - 1 257 520 (GJUTERIE) <br> * Fig. 1-3; Spalte 3 * <br> -- | 1-3 | B 65 H 75/24 |
| A | US - A - 3 904 143 (KULLANDER) <br> * Fig. 46; Spalten 2,3 * <br> -- | 1-3 | |
| A | US - A - 3 425 642 (MAY) <br> * Gesamt * <br> ---- | 1,2 | |

| RECHERCHIERTE SACHGEBIETE (Int. Cl. ³) |
|---|
| B 65 H 19/00 <br> B 65 H 75/00 |

Der vorliegende Recherchenbericht wurde für alle Patentansprüche erstellt.

| Recherchenort | Abschlußdatum der Recherche | Prüfer |
|---|---|---|
| WIEN | 09-11-1982 | HOFMANN |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, überein- stimmendes Dokument

EPA Form 1503. 03.82